# EUROPEAN PATENT APPLICATION

(11) **EP 4 752 947 A1**
(43) Date of publication of application: **03.06.2026**
(21) Application number: 25219246.3
(22) Date of filing: 27.11.2025
(51) Int. Cl.: H01M 4/13, H01M 10/0567

(54) **LITHIUM-ION BATTERY**

(30) Priority: 28.11.2024 CN 202411723649
(71) Applicant: Zhuhai CosMX Battery Co., Ltd., Zhuhai, Guangdong 519180 (CN)
(72) Inventor: QIU, Yaming, Zhuhai 519180 (CN); WANG, Hai, Zhuhai 519180 (CN)
(74) Representative: Murgitroyd & Company

(57) **Abstract**

The present disclosure provides a lithium-ion battery. In the lithium-ion battery of the present disclosure, the positive electrode plate comprises a first surface and a second surface arranged oppositely along its thickness direction. The first surface is provided with a plurality of first projections at intervals, and the second surface is correspondingly provided with a plurality of first recesses. The height of the first projection is denoted as H µm, and the diameter of the first projection is denoted as R mm, with H and R satisfying 0.2 ≤ H/R ≤ 80. The electrolyte comprises a carboxylic ester, with the mass percentage of the carboxylic ester relative to the total electrolyte mass denoted as A, which satisfies 10 ≤ A ≤ 80. When the above conditions are met, the battery's fast-charging performance and cycle stability can be improved.

## Description

### TECHNICAL FIELD

The present disclosure relates to the technical field of lithium-ion batteries, and more particularly, to a lithium-ion battery.

### BACKGROUND

Lithium-ion batteries have become an indispensable part of daily life, providing long-lasting and robust power for smartphones, laptops, electric vehicles, and so on. Their convenience and reliability have significantly enhanced the quality of life across work, study, and entertainment. As technology advances, fast-charging technology has emerged, drastically reducing charging times to meet the demands of modern fast-paced lifestyles.

However, a critical issue during fast charging is lithium plating. When lithium ions rapidly de-intercalate from the positive electrode and attempt to intercalate into the negative electrode, if the negative electrode's intercalation rate cannot keep pace with the charging speed, or if the electrode surface becomes saturated with intercalated lithium, lithium ions may deposit on the negative electrode surface as metallic lithium. This not only shortens the battery's lifespan but also poses significant safety risks such as overheating, swelling, or even thermal runaway. Therefore, effectively controlling and mitigating lithium plating while improving charging speeds has emerged as a vital challenge in the development of lithium-ion battery technology.

### SUMMARY

The objective of the present disclosure is to overcome the aforementioned drawbacks in existing technologies by providing a lithium-ion battery with projections and recesses on the positive electrode plate. By controlling the ratio of the height (H) to the diameter (R) of the projections, appropriately sized irregular textures are formed on the positive electrode surface. This enhances electrolyte retention capacity, optimizes lithium-ion transport pathways, and improves fast-charging performance. Concurrently, the incorporation of carboxylic esters and nitrile compounds in the electrolyte, which exhibit low viscosity, enhances conductivity, accelerates uniform lithium-ion transport, and effectively mitigates localized lithium-ion transport inequalities potentially caused by the projections and recesses. This reduces lithium plating and improves cycle stability.

In order to achieve the above objectives, the present disclosure provides a lithium-ion battery comprising a positive electrode plate, a negative electrode plate, and an electrolyte.

The positive electrode plate comprises a first surface and a second surface arranged oppositely along its thickness direction. The first surface is intermittently provided with plural first projections, and corresponding first recesses are formed on the second surface. The height of the first projections is denoted as H (µm) and their diameter as R (mm); the ratio H/R satisfies: 0.2 ≤ H/R ≤ 80.

The electrolyte contains carboxylic esters. The mass percentage of carboxylic esters relative to the total electrolyte mass is denoted as A (%); A satisfies: 10 ≤ A ≤ 80.

The electrolyte contains nitrile compounds. The mass percentage of nitrile compounds relative to the total electrolyte mass is denoted as B (%); B satisfies: 3 ≤ B ≤ 30.

### Advantages of the Technical Solution.

The lithium-ion battery provided by the present disclosure forms appropriately sized irregular textures on the positive electrode surface by adjusting the H/R ratio of projections. This enhances electrolyte retention, optimizes lithium-ion transport pathways, and improves fast-charging performance. Simultaneously, the carboxylic esters and nitrile compounds in the electrolyte reduce viscosity, enhance conductivity, and accelerate uniform lithium-ion transport. This effectively alleviates localized lithium-ion transport inequalities caused by the projections and recesses, reduces lithium plating, and improves cycle stability.

The endpoints and any values disclosed herein are not limited to the precise ranges or values but should be interpreted as including values proximate to such ranges or values. For numerical ranges, new ranges may be formed by combining endpoint values of individual ranges, endpoint values with discrete point values, or discrete point values with each other. These new ranges are deemed specifically disclosed herein. Unless otherwise specified, all data ranges comprise their endpoints.

### BRIEF DESCRIPTION OF THE DRAWINGS

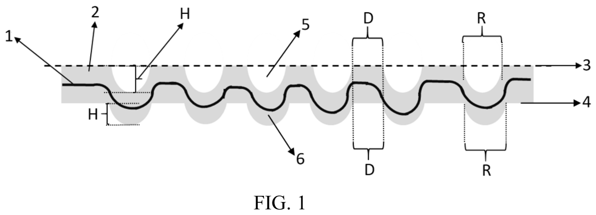

Figure 1 illustrates a schematic structural diagram of a positive electrode plate in an embodiment of the present disclosure.

### Reference numerals:

1.Positive current collector; 2.Positive active material layer; 3.Second surface; 4.First surface; 5.First recess; 6.First projection

### DETAILED DESCRIPTION OF THE EMBODIMENTS

The following provides a detailed description of specific embodiments of the present disclosure. It should be understood that the specific embodiments described herein are for illustrative and explanatory purposes only and are not intended to limit the present disclosure.

Unless otherwise defined, all scientific and technical terms used in the present disclosure have the same meanings as commonly understood by those skilled in the art to which the present disclosure pertains.

In the present disclosure, the terms "battery," "lithium battery," "lithium-ion battery," and "lithium-ion secondary battery" all share the same meaning, referring to a lithium-ion secondary battery, which typically comprises an electrode assembly (e.g., a positive electrode plate, a negative electrode plate, and a separator), a container (housing) accommodating the electrode assembly, and an electrolyte.

In the present disclosure, the term "C4-C10 carboxylic ester" refers to a carboxylic ester in which the number of carbon atoms in the hydrocarbon group (i.e., the carbon chain attached to the carboxyl group) of the carboxylic molecule ranges from 4 to 10.

In the present disclosure, the term "fluorinated carboxylic ester" refers to a compound formed by replacing hydrogen atoms in the carboxylic molecule with fluorine atoms. Specifically, when a fluorinated derivative of a C4-C10 carboxylic ester is referred to as a fluorinated carboxylic ester, it means a compound formed by replacing hydrogen atoms in the C4-C10 carboxylic ester with fluorine atoms.

In the present disclosure, the term "C2-C10 mononitrile compound and its fluorinated derivative" refers to a nitrile compound containing only one cyano group and having a carbon number ranging from 2 to 10. The "fluorinated derivative of a C2-C10 mononitrile compound" means a compound formed by replacing hydrogen atoms in the hydrocarbon group of a mononitrile compound having a carbon number of 2 to 10 with fluorine atoms. Among them, mononitrile compounds and their fluorinated derivatives comprise saturated mononitrile compounds and their fluorinated derivatives, as well as unsaturated mononitrile compounds and their fluorinated derivatives.

In the present disclosure, the term "C2-C10 polynitrile compound and its fluorinated derivative" refers to a nitrile compound containing two or more cyano groups and having a carbon number ranging from 2 to 10. The "fluorinated derivative of a C2-C10 polynitrile compound" means a compound formed by replacing hydrogen atoms in the hydrocarbon group of a polynitrile compound having a carbon number of 2 to 10 with fluorine atoms. Among them, polynitrile compounds and their fluorinated derivatives comprise saturated polynitrile compounds and their fluorinated derivatives, as well as unsaturated polynitrile compounds and their fluorinated derivatives.

The present disclosure provides a lithium-ion battery, which comprises a positive electrode plate, a negative electrode plate, and an electrolyte;
In a thickness direction of the positive electrode plate, the positive electrode plate comprises a first surface 4 and a second surface 3 arranged opposite to each other. The first surface 4 is provided with a plurality of first protruding portions at intervals, and correspondingly, the second surface is provided with a plurality of first recesses 5. The height of the first protruding portions is denoted as H µm, and the diameter of the first protruding portions is denoted as R mm, with H and R satisfying: 0.2 ≤ H/R ≤ 80.

The electrolyte comprises a carboxylate, wherein the mass percentage of the carboxylate relative to the total electrolyte mass is denoted as A %. A satisfies: 10 ≤ A ≤ 80.

The electrolyte comprises a nitrile compound, wherein the mass percentage of the nitrile compound relative to the total electrolyte mass is denoted as B %. B satisfies: 3 ≤ B ≤ 30.

For example, the value of H/R may be any point value within the range of 0.2, 0.3, 0.4, 0.5, 0.75, 1, 3, 5, 10, 15, 20, 25, 30, 35, 40, 45, 50, 55, 60, 65, 70, 75, 80, or any range formed by two of the above values.

For example, the mass percentage of carboxylate A % in the electrolyte may be any point value within the range of 10%, 15%, 20%, 25%, 30%, 35%, 40%, 45%, 50%, 55%, 60%, 65%, 70%, 75%, 80%, or any range formed by two of the above values.

For example, the mass percentage B % of nitrile compound in the electrolyte may be any point value within the range of 3%, 5%, 8%, 10%, 12%, 14%, 16%, 18%, 20%, 22%, 24%, 26%, 28%, 30%, or any range formed by two of the above values.

It should be noted that when the value of H/R is calculated, the values of H and R, for example, H = 20 µm and R = 2 mm, H/R = 20/2 = 10, are substituted into the formula without considering unit conversion.

During the charging and discharging process of the battery, the insertion and extraction of lithium ions in the electrode plates cause significant volume changes inside the battery. This volume change exerts a large compressive force on the electrode surface. The electrode surface at the arc portion of the wound structure of the wound battery receives an even greater compressive force, making it more prone to deformation. This deformation can easily lead to insufficient electrolyte at the arc portion, restricting the lithium ion transport channels and preventing lithium ions from smoothly reaching the negative electrode surface for insertion, thereby triggering safety issues such as lithium plating.

In the present disclosure, the uneven texture creates a certain gap structure on the surface of the electrode plate by providing protruding portions and recesses on the positive electrode plate. Under compressive stress, this structure can release stress, thereby stabilizing the internal structure of the electrode plate. Furthermore, the recesses formed by the electrode plate and the space formed between the protruding portions and the separator can store electrolyte, providing a relatively stable storage space for the electrolyte. This avoids the problem of insufficient electrolyte at stress concentration points on the electrode plate, facilitates the normal conduction and transport of lithium ions, and reduces the occurrence of lithium plating issues. Additionally, the concave-convex texture formed on the surface of the positive electrode plate increases the specific surface area of the positive electrode plate, providing more transport sites and pathways for lithium ions to enter the interior of the electrode plate. This improves the lithium ion transport rate within the electrode plate, prevents the accumulation of lithium ions on the surface of the electrode plate during fast charging, and thereby enhances the fast-charging performance of the battery. However, when the protruding portions and recesses (e.g., during rolling) are formed, tiny cracks may appear on the surface of the positive electrode plate. These cracks may cause bending and fracture of the active material structure within the positive electrode plate, hindering the smooth insertion and extraction of lithium ions and leading to a decrease in battery performance. Furthermore, they may also cause uneven compaction of the positive electrode plate, potentially leading to abnormal local lithium ion transport rates and local lithium plating. By introducing carboxylate and nitrile compounds as solvent components in the electrolyte, the electrolyte has a lower viscosity and a higher dielectric constant, which improves the conductivity of the electrolyte and accelerates the lithium ion transport rate. This prevents the accumulation of lithium ions at the same location after extraction and also accelerates the lithium ion transport rate caused by concentration differences, making the distribution of lithium ions in the electrolyte more uniform and their transport in the electrode plate more even. This effectively alleviates the problem of uneven local lithium ion transport rates that may arise during the formation of protruding portions or recesses, ensuring a good lithium ion transport rate across the entire electrode surface. This reduces local lithium plating at the embossed portions of the electrode surface and improves the cycle stability of the battery.

In the present disclosure, the problem of lithium plating during high-rate charging and discharging of the battery is addressed by providing protruding portions and recesses on the electrode plate and introducing carboxylic ester and nitrile compounds as solvents in the electrolyte. This reduces lithium plating on the electrode surface, thereby mitigating issues such as battery capacity decay and battery swelling caused by lithium plating, and enhancing the fast-charging cycle stability of the battery.

In some embodiments, the height (H) of the first projection and the diameter (R) thereof satisfy 0.2 ≤ H/R ≤ 80. When the condition is H/R>80, the projection structure (or embossing structure) of the positive electrode plate becomes fragile and susceptible to mechanical stress-induced fragmentation. On one hand, this may damage the internal active material structure of the electrode plate, affecting normal lithium-ion intercalation/deintercalation; on the other hand, during battery cycling, the SEI film on the electrode surface may deform with structural changes, leading to degraded battery performance and potential safety hazards. When H/R<0.2, the embossing depth is insufficient, resulting in indistinct texture patterns with negligible differences between embossed and non-embossed areas. This fails to effectively resolve structural instability caused by stress extrusion and electrolyte deficiency issues, while providing no significant increase in specific surface area to enhance lithium-ion transport efficiency between electrolyte and electrode. Optimally, when the condition is 0.75≤H/R≤20, the mechanical strength of both projections and recesses is balanced, significantly improving fast-charging performance and safety.

In some embodiments, as shown in Figure 1, the entire positive electrode plate undergoes embossing treatment. The positive electrode plate comprises a second surface 3 and a first surface 4 arranged oppositely along its thickness direction. After the second surface 3 is embossed , the positive electrode plate forms uniformly spaced first recesses 5, while corresponding first projections 6 are formed on the first surface 4. Conversely, embossing may also be applied to the first surface 4 to create uniformly spaced first recesses 5, with corresponding first projections 6 formed on the second surface 3. The positions of first projections 6 and first recesses 5 on the second surface 3 and the first surface 4 are interchangeable. The first projections or recesses may be uniformly or non-uniformly spaced, with uniform spacing preferred.

In alternative embodiments, embossing may be applied only to localized areas of the positive electrode plate, such as edge regions, curved areas, etc.

In some embodiments, the first projections 6 or first recesses 5 (embossing patterns) may exhibit regular or irregular shapes, including circular, square, hexagonal, other regular shapes, or irregular forms, with regular shapes preferred, particularly circular shapes.

In some embodiments, the first projections 6 and first recesses 5 may be arranged in uniformly spaced patterns, or their arrangement may be adjusted according to practical requirements, such as partial uniform spacing combined with partial non-uniform spacing.

In some embodiments, the first projections 6 and/or first recesses 5 satisfy at least one of the following conditions.

(a) The average spacing between adjacent first projections or adjacent first recesses is denoted as D. For adjacent first projections (two adjacent first projections), the average spacing ranges from 0.5 mm to 8 mm, such as 0.5 mm, 1 mm, 1.5 mm, 2 mm, 2.5 mm, 3 mm, 3.5 mm, 4 mm, 4.5 mm, 5 mm, 5.5 mm, 6 mm, 6.5 mm, 7 mm, 7.5 mm, 8 mm, or any intermediate value within these ranges defined by the any two aforementioned values, preferably the range from 1 mm to 4 mm; and/or for adjacent first recesses (two adjacent first recesses), the average spacing also ranges from 0.5 mm to 8 mm, such as 0.5 mm, 1 mm, 1.5 mm, 2 mm, 2.5 mm, 3 mm, 3.5 mm, 4 mm, 4.5 mm, 5 mm, 5.5 mm, 6 mm, 6.5 mm, 7 mm, 7.5 mm, 8 mm, or any intermediate value within these ranges defined by the any two aforementioned values, preferably the range from 1 mm to 4 mm. The average spacing between adjacent first projections and that between adjacent first recesses may be identical or different, with identical spacing preferred. The term "average spacing between adjacent first projections" or "average spacing between adjacent first recesses" denoted as D in Figure 1 may be defined as the shortest straight-line distance between the centers of two nearest adjacent first projections or two nearest adjacent first recesses on the positive electrode plate surface along its length direction.

When the average spacing of first projections and/or first recesses falls within the aforementioned ranges, their arrangement density lies within an appropriate scope. This controls the number of first projections and/or first recesses within a given area, ensuring effective enhancement of fast-charging performance while avoiding structural instability caused by excessively small average spacing.

(b) The height of the first projections is denoted as H, which may be 3 µm, 5 µm, 8 µm, 10 µm, 20 µm, 30 µm, 40 µm, 50 µm, 60 µm, 70 µm, 80 µm, 90 µm, 100 µm, or any intermediate value within these ranges defined by the any two aforementioned values; and/or the depth of the first recesses ranges from 3 µm to 100 µm, such as 3 µm, 5 µm, 8 µm, 10 µm, 20 µm, 30 µm, 40 µm, 50 µm, 60 µm, 70 µm, 80 µm, 90 µm, 100 µm, or any intermediate value within these ranges defined by the any two aforementioned values. The term "height of the first projections" as shown by H in Figure 1 may be defined as the maximum distance from the top of the first projection 6 (farthest from the positive current collector 1) to the first surface 4 of the positive electrode plate. The term "depth of the first recesses" may be defined as the maximum distance from the bottom of the first recess 5 (closest to the positive current collector 1) to the second surface 3 of the positive electrode plate. When the height of the first projections and/or depth of the first recesses fall within these ranges, it prevents structural fragility caused by excessively tall projections or deep recesses that could lead to structural fractures from mechanical stress, while also avoiding insufficient electrolyte infiltration due to overly shallow features that would limit fast-charging performance improvements.

(c) The diameter of the first projections is denoted as R, ranging from 0.5 mm to 4 mm, such as 0.5 mm, 1 mm, 1.5 mm, 2 mm, 2.5 mm, 3 mm, 3.5 mm, 4 mm, or any intermediate value within these ranges defined by the any two aforementioned values, preferably the range from 1 mm to 3 mm; and/or the diameter of the first recesses ranges from 0.5 mm to 4 mm, such as 0.5 mm, 1 mm, 1.5 mm, 2 mm, 2.5 mm, 3 mm, 3.5 mm, 4 mm, or any intermediate value within these ranges defined by the any two aforementioned values, preferably the range from 1 mm to 3 mm. The term "diameter of the first projections" or "diameter of the first recesses" as shown by R in Figure 1 may be defined as the maximum straight-line distance between two edges of the first projection or first recess in a direction parallel to the positive electrode plate. When the diameter of the first projections and/or first recesses falls within these ranges, it controls the size of these features to prevent weakened electrode strength from oversized diameters that could cause physical damage and surface fractures, as well as avoiding undersized diameters that would hinder electrolyte infiltration and limit fast-charging improvements.

In some embodiments, the carboxylic esters comprise at least one of C4-C10 carboxylic esters and their fluorinated derivatives. Preferably, the carboxylic esters comprise at least one of ethyl acetate, propyl acetate, butyl acetate, methyl propionate, ethyl propionate, propyl propionate, methyl butyrate, ethyl butyrate, propyl butyrate, and difluoroethyl acetate.

In some embodiments, the nitrile compounds comprise at least one of C2-C10 mononitriles and their fluorinated derivatives, and C2-C10 polynitriles and their fluorinated derivatives. Preferably, the nitrile compounds comprise at least one of acetonitrile, propionitrile, butyronitrile, isobutyronitrile, malononitrile, succinonitrile, glutaronitrile, adiponitrile, 1,3,6-hexanetricarbonitrile, benzonitrile, acrylonitrile, crotononitrile, trans-butenedinitrile, trans-hexenedinitrile, 1,2-bis(cyanoethoxy)ethane, or fluorinated derivatives thereof.

C4-C10 carboxylic esters exhibit low viscosity and relatively high dielectric constants (viscosity ≤ 1 mPa·s; dielectric constant ≥ 10), while C2-C10 nitrile compounds have moderate viscosity and high dielectric constants (viscosity ≤ 2 mPa·s; dielectric constant ≥ 20). These carboxylic esters and nitrile compounds are selected as electrolyte solvents to enable the electrolyte to maintain low viscosity, further enhancing its conductivity, achieving better kinetic performance, and improving lithium-ion transport rates in the electrolyte. During infiltration into electrode plates, this selection effectively reduces localized differences in lithium-ion transport rates within the electrodes, promoting more uniform lithium-ion transmission, mitigating local lithium plating in the battery, and further improving fast-charging performance and cycle safety.

In some embodiments, the carboxylic esters comprise propyl propionate (PP) and difluoroethyl acetate (DFEA). In the electrolyte, the mass ratio of propyl propionate to difluoroethyl acetate is denoted as C, wherein 1 ≤ C ≤ 10, such as 1%, 2%, 3%, 4%, 5%, 6%, 7%, 8%, 9%, 10%, or any intermediate value within these ranges defined by the any two aforementioned values. The fluorine atoms in DFEA have a high oxidation potential, which significantly enhances the electrolyte's oxidation resistance when used as a solvent, allowing stable existence during high-voltage cycling and improving high-voltage cycle performance. However, DFEA has poorer solubility for lithium salts compared to other carboxylic esters. Excessive DFEA content often leads to lithium salt precipitation, preventing the electrolyte from maintaining a homogeneous state and significantly degrading battery performance (e.g., cycle performance and safety). As a carboxylic ester, PP contains carboxyl (-COOH) or ester (-COO-) groups in its molecular structure that can form strong interactions with lithium ions in lithium salts, providing excellent solubility for lithium salts. When combined with DFEA, PP enhances lithium salt solubility, reduces precipitation issues caused by DFEA alone, and improves high-voltage cycle performance. When PP and DFEA are added to the electrolyte and the electrode plate is designed with recesses and projections, the uneven texture of the electrode surface not only facilitates uniform electrolyte distribution and rapid infiltration but also further optimizes electrolyte transport properties. This aids lithium salt dissolution and transport in the electrolyte, mitigating the risk of lithium salt precipitation caused by high DFEA content to some extent, while enhancing cycle stability and safety under high voltage. Therefore, the combined use of PP and DFEA, along with the recessed and protruding structures on the electrode plate, synergistically addresses electrolyte inhomogeneity and lithium salt precipitation issues, while improving high-voltage cycle performance.

In some embodiments, the fluorinated derivatives of the C4-C10 carboxylic esters are fluorinated carboxylic esters; the nitrile compounds comprise unsaturated nitriles; the unsaturated nitriles comprise at least one of unsaturated mononitrile compounds and their fluorinated derivatives, unsaturated polynitrile compounds or their fluorinated derivatives; the total mass percentage of the fluorinated carboxylic ester and the unsaturated nitrile relative to the total electrolyte mass is denoted as D%, and D satisfies: 0 ≤ D ≤ 30, for example, it can be 0, 1%, 2%, 5%, 8%, 10%, 12%, 14%, 16%, 18%, 20%, 22%, 24%, 26%, 28%, 30%, or any point value within these ranges defined by the any two aforementioned values. The fluorinated carboxylic ester comprises at least one of ethyl difluoroacetate, ethyl trifluoroacetate, ethyl 3-fluoropropionate, and ethyl 3,3,3-trifluoropropionate; and/or the unsaturated nitrile comprises at least one of acrylonitrile, crotononitrile, trans-butenedinitrile, and trans-hexenedinitrile.

Due to the substitution of fluorine atoms, fluorinated carboxylic esters in carboxylic esters have strong antioxidant properties, which can significantly improve the overall antioxidant performance of the electrolyte and reduce oxidative deterioration of the electrolyte. Unsaturated nitriles among nitrile compounds not only have good antioxidant properties but also can participate in the formation of an SEI film on the surface of the electrode, avoiding direct contact between the electrolyte and the electrode active material and reducing the occurrence of side reactions. However, fluorinated carboxylic esters and unsaturated nitriles usually have high viscosity. When their content in the electrolyte is too high, the overall viscosity of the electrolyte will increase significantly, which in turn reduces the conductivity of the electrolyte and prevents lithium ions from being normally transported in the electrolyte, easily causing lithium plating on the electrode surface and leading to a decrease in battery performance. Since the electrode surface is provided with projections and recesses, forming an uneven texture on the electrode surface, it not only provides more penetration channels for the electrolyte, optimizes the transmission performance of the electrolyte, alleviates to a certain extent the problem of increased electrolyte viscosity and decreased conductivity caused by the high content of fluorinated carboxylic esters and unsaturated nitriles, but also helps guide the uniform distribution and transmission of lithium ions on the electrode surface, reducing the risk of lithium plating. Therefore, the total mass percentage of the fluorinated carboxylic ester and the unsaturated nitrile is further adjusted to meet the above range, in conjunction with the setting of recesses and projections on the electrode surface, it can improve the high-voltage cycle performance of the battery while taking into account the fast-charging performance of the battery.

In some embodiments, the electrolyte comprises fluorobenzene compounds; the mass percentage of fluorobenzene compounds relative to the total electrolyte mass is denoted as E %; E satisfies: 2 ≤ E ≤ 20, for example, it can be 2%, 4%, 6%, 8%, 10%, 12%, 14%, 16%, 18%, 20%, or any point value within these ranges defined by the any two aforementioned values. Preferably, the fluorobenzene compounds comprise at least one of fluorobenzene, 1,2-difluorobenzene, 1,3-difluorobenzene, 1,4-difluorobenzene, 1,2,3-trifluorobenzene, 1,2,4-trifluorobenzene, 1,2,3,4-tetrafluorobenzene, 1,2,3,5-tetrafluorobenzene, 1,2,4,5-tetrafluorobenzene, pentafluorobenzene, perfluorobenzene, or the fluorinated aromatic compounds derived from the aforementioned fluorobenzene.

Although providing projections and recesses on the electrode surface improves the specific surface area of the electrode and increases the rate of lithium ion insertion and extraction from the electrode, it also increases the compaction density of the electrode and relatively reduces the pores between materials, which is not conducive to the infiltration of the electrolyte and limits the further improvement of the fast-charging performance of the battery. As aromatic fluorinated alkanes, fluorobenzene compounds have strong aromaticity, and the aromatic structure in fluorobenzene compounds can form π-π stacking interactions with the electrode structure, making them easier to enter the electrode. When fluorobenzene compounds are introduced as one of the solvents in the electrolyte, they can significantly improve the infiltration of the electrolyte into the electrode, accelerate the insertion and extraction of lithium ions in the electrode, reduce lithium plating on the electrode surface, and further optimize the fast-charging performance of the battery. However, fluorobenzene compounds have low polarity and low solubility for lithium salts. If their content is too high, it will cause the precipitation of lithium salts. When the content of fluorobenzene compounds is adjusted within the above range in the present disclosure, it can avoid the problem of lithium salt precipitation caused by the excessive content of fluorobenzene compounds, ensure that fluorobenzene compounds can play their role without deteriorating other battery performance (such as cycle performance and safety, etc.).

In some embodiments, the electrolyte comprises a lithium salt; the mass percentage of the lithium salt relative to the total electrolyte mass is 5%-20%, for example, it can be 5%, 6%, 7%, 8%, 9%, 10%, 11%, 12%, 13%, 14%, 15%, 16%, 17%, 19%, 20%, or any point value within these ranges defined by the any two aforementioned values. The lithium salt comprises at least one of lithium-containing inorganic salts and/or lithium-containing organic salts.

In some embodiments, the lithium-containing inorganic salt comprises at least one of LiPF₆, LiBF₄, or LiPO₂F₂.

In some embodiments, the lithium-containing organic salt comprises at least one of lithium bis(oxalato)borate (LiBOB), lithium difluorobis(oxalato)phosphate (LiODFP), lithium difluorobis(oxalato)borate (LiODFB), lithium bis(trifluoromethanesulfonyl)imide (LiTFSI), lithium bis(fluorosulfonyl)imide (LiFSI), or lithium bis(dithiooxalato)imide (LiDTI).

As the main medium for lithium ion transmission between the positive and negative electrodes of a lithium battery, the content of lithium ions is directly related to battery performance. Especially in a battery system requiring rapid charging and discharging, the mass percentage of lithium salts is adjusted to meet the above range, therefore, it can avoid the possible increase in electrolyte viscosity when the content of lithium salts is too high, which affects the transmission of lithium ions in the electrolyte and even leads to lithium plating problems; it can also avoid the reduction in the fast-charging performance of the battery, the decrease in energy density, and the impact on the cycle life of the battery when the content of lithium salts is too low.

It should be noted that the mass percentage of carboxylic ester (A), the mass percentage of nitrile compound (B), the mass percentage of propyl propionate, the mass percentage of ethyl difluoroacetate, the mass percentage of fluorinated carboxylic ester, the mass percentage of unsaturated nitrile, and the mass percentage of fluorobenzene compound (E) in the present disclosure can all be determined by gas chromatography-mass spectrometry (GCMS).

In some embodiments, the electrolyte comprises a carbonate solvent, which comprises one or more of ethylene carbonate (EC), ethyl methyl carbonate (EMC), dimethyl carbonate (DMC), diethyl carbonate (DEC), or methyl propyl carbonate (MPC).

In some embodiments, the positive active material layer further 2 comprises a positive active material, a positive conductive agent, and a positive binder.

In some embodiments, the mass percentage of each component in the positive active material layer is: 90wt%-99.2wt% (e.g., 90wt%, 91wt%, 92wt%, 93wt%, 94wt%, 95wt%, 96wt%, 97wt%, 98wt%, or 99.2wt%) positive active material, 0.4wt%-5wt% (e.g., 0.4wt%, 0.5wt%, 1wt%, 1.5wt%, 2wt%, 2.5wt%, 3wt%, 3.5wt%, 4wt%, 4.5wt%, or 5wt%) positive conductive agent, and 0.4wt%-5wt% (e.g., 0.4wt%, 0.5wt%, 1wt%, 1.5wt%, 2wt%, 2.5wt%, 3wt%, 3.5wt%, 4wt%, 4.5wt%, or 5wt%) positive binder.

In some embodiments, the positive active material is selected from one or more of transition metal lithium oxides, lithium iron phosphate, lithium manganese iron phosphate, lithium manganate, and lithium-rich manganate. The chemical formula of the transition metal lithium oxide is Li(1+x)NiyCozM(1-y-z)O2, wherein -0.1 ≤ x ≤ 1; 0 ≤ y ≤ 1, 0 ≤ z ≤ 1, and 0 ≤ y+z ≤ 1. M represents one or more of Mg, Zn, Ga, Ba, Al, Fe, Cr, Sn, V, Mn, Sc, Ti, Nb, Mo, or Zr. The positive conductive agent is not specifically limited and may be selected from conventional conductive agents in the art, including but not limited to one or more of acetylene black, conductive carbon black, ketjen black, conductive graphite, carbon nanotubes, conductive carbon fibers, and graphene. The positive binder is not specifically limited and may be selected from conventional binders in the art, including but not limited to one or more of polyvinylidene fluoride, polytetrafluoroethylene, sodium carboxymethyl cellulose, styrene-butadiene rubber, and polyethylene oxide.

In some embodiments, the negative electrode plate comprises a negative current collector and a negative active material layer coated on one or both sides of the negative current collector. The negative active material layer comprises a negative active material, a negative conductive agent, and a negative binder.

In some embodiments, the mass percentage of each component in the negative active material layer is: 90wt%-99.2wt% (e.g., 90wt%, 91wt%, 92wt%, 93wt%, 94wt%, 95wt%, 96wt%, 97wt%, 98wt%, or 99.2wt%) negative active material, 0.3wt%-5wt% (e.g., 0.3wt%, 0.5wt%, 1wt%, 1.5wt%, 2wt%, 2.5wt%, 3wt%, 3.5wt%, 4wt%, 4.5wt%, or 5wt%) negative conductive agent, and 0.5wt%-5wt% (e.g., 0.5wt%, 1wt%, 1.5wt%, 2wt%, 2.5wt%, 3wt%, 3.5wt%, 4wt%, 4.5wt%, or 5wt%) negative binder.

In some embodiments, the negative active material comprises a composite material of one or more of artificial graphite, natural graphite, hard carbon, soft carbon, silicon-carbon, silicon-oxygen, nano-silicon, and silicon alloys. The types of negative conductive agent and negative binder are not specifically limited and may be selected from conventional conductive agents and binders in the art. The negative conductive agent comprises but is not limited to one or more of conductive carbon black, acetylene black, Ketjen black, conductive graphite, conductive carbon fibers, carbon nanotubes, and metal powders. The negative binder comprises but is not limited to one or more of styrene-butadiene rubber emulsion, polytetrafluoroethylene emulsion, sodium carboxymethyl cellulose, sodium alginate, polyvinyl alcohol, polyacrylic acid, lithium polyacrylate, sodium polyacrylate, and carboxylated chitosan.

In this disclosure, the type of separator is not specifically limited. For example, conventional lithium-ion battery separators in the art may comprise but not limited to woven membranes, nonwoven membranes (non-woven fabrics), microporous membranes, composite membranes, separator paper, rolled membranes, polyethylene microporous membranes, and polypropylene microporous membranes, etc.

The technical solutions in the embodiments of this disclosure will be clearly and completely described below. It is evident that the described embodiments are only a part of the embodiments of this disclosure, rather than all embodiments. All other embodiments obtained by a person of ordinary skill in the art without creative efforts based on the embodiments of this disclosure fall within the scope of protection of this disclosure.

Unless otherwise specified, the materials, reagents, etc., used in the following embodiments are all commercially available.

The present disclosure is described in detail below with specific embodiments. These embodiments are intended for understanding rather than limiting the disclosure.

### Example 1-1:

### 1. Preparation of Positive Electrode plate

Lithium cobalt oxide, conductive additive (mixture of conductive carbon black and carbon nanotubes), and PVDF are dispersed in NMP at a mass ratio of 97.60:1.35:1.05, then the mixture is uniformly stirred to form a positive electrode slurry. This slurry is evenly coated on both sides of a 9 µm aluminum foil with a coating areal density of 0.01704 g/cm². After the slurry is dried and rolled sequentially with compaction density of 4.2 g/cm², a positive electrode plate with a single-sided active material layer thickness of 90 µm is obtained. The cut positive electrode plates are processed with a special roller containing projections, wherein the projections have a height of 20 µm, diameter of 2 mm, and average spacing of 3 mm.

### 2. Preparation of Negative Electrode plate

Silicon-containing artificial graphite (with 10% silicon content), conductive carbon black, styrene-butadiene rubber, and sodium carboxymethyl cellulose are dispersed in deionized water at a mass ratio of 97.2:0.5:1.3:1. The slurry is uniformly stirred to form a negative electrode slurry, which is then evenly coated on the negative current collector, dried, rolled and cut. The negative electrode plates are processed with a special roller containing projections, wherein the projections have a height of 20 µm, a diameter of 2 mm, an average spacing of 3 mm.

### 3. Preparation of Electrolyte

In an argon-filled glove box (moisture <1 ppm, oxygen <1 ppm), ethylene carbonate (EC), diethyl carbonate (DEC), and propyl propionate (PP) are mixed into a homogeneous solvent. Lithium hexafluorophosphate (LiPF6, 14% by total electrolyte mass) and fluoroacetonitrile (15% by total electrolyte mass) are slowly added and stirred uniformly. Then, the required lithium-ion battery electrolyte is obtained. The mass ratio of PP is 45% relative to the total electrolyte mass. The total mass ratio of EC and DEC is calculated to be 1:1.

### 4. Fabrication of Lithium-Ion Battery

The cut positive electrode plates, separators, and negative electrode plates are sequentially stacked and wound into a jelly-roll structure. After encapsulation, electrolyte injection, formation, and secondary sealing, lithium-ion batteries are produced. The separator employs a 9 µm thick substrate, alumina ceramic, and a PVDF adhesive layer.

### Performance Testing

### (1) Cycle Performance Test at 25°C

The batteries prepared in the examples and comparative examples are subjected to 500 charge-discharge cycles at 25°C with a 1C rate within the cutoff voltage range (3.0V-4.5V). The discharge capacity of the first cycle is recorded as x1 mAh, and the battery thickness is measured as y1. The discharge capacity of the 500th cycle is recorded as x2 mAh, and the battery thickness after the 500th cycle is measured as y2. The cycle capacity retention rate at the 500th cycle (R1) is calculated as x2/x1. The battery thickness swelling rate at the 500th cycle (H1) is calculated as (y2-y1)/y1.

### (2) Cycle Performance Test at 45°C

The batteries are subjected to 500 charge-discharge cycles at 45°C with a 1C rate within the cutoff voltage range (3.0V-4.5V). The discharge capacity of the first cycle is recorded as x3 mAh, and the battery thickness is measured as y3. The discharge capacity of the 500th cycle is recorded as x4 mAh, and the battery thickness after the 500th cycle is measured as y4. The cycle capacity retention rate at the 500th cycle (R2) is calculated as x4/x3. The battery thickness swelling rate at the 500th cycle (H2) is calculated as (y4-y3)/y3.

### (3) 4.7V Cycle Performance Test at 25°C

The batteries are subjected to 300 charge-discharge cycles at 25°C with a 1C rate within the cutoff voltage range (3.0V-4.7V). The discharge capacity of the first cycle is recorded as x1 mAh, and the battery thickness is measured as y1. The discharge capacity of the 300th cycle is recorded as x2 mAh, and the battery thickness after the 300th cycle is measured as y2. The cycle capacity retention rate at the 300th cycle (R) is calculated as x2/x1. The battery thickness swelling rate at the 300th cycle (H) is calculated as (y2-y1)/y1.

### (4) Lithium Plating Analysis Test

The batteries prepared in the examples and comparative examples are charged at a constant current and constant voltage of 3C to 4.5V at 25°C, with a cut-off current of 0.05C, and then discharged at a constant current of 0.5C to 3.0V. After 20 cycles of this process, the batteries are fully charged, dissected, and examined for lithium plating. The extent of lithium plating is categorized from mild to severe as follows: no lithium plating, slight lithium plating, lithium plating, and severe lithium plating.

Examples 1-3 and Comparative Examples 1-5 are conducted following Example 1-1, with primary differences listed in Table 1. Specifically, Example 1 modifies the height (H) and/or diameter (R) of the first projections, and the H/R ratio. Example 2 adjusts the mass ratio (A) of carboxylic esters in the electrolyte. Example 3 varies the mass ratio (B) of nitrile compounds in the electrolyte. Comparative Example 1 has an H/R ratio below the protected scope of the disclosure. Comparative Example 2 has an H/R ratio above the protected scope. Comparative Example 3 has a carboxylic ester mass ratio below the protected scope. Comparative Example 4 has a nitrile compound mass ratio above the protected scope. Comparative Example 5 does not employ embossing treatment on the electrodes.

**Table 1**

| | H(µm) | R(mm) | H/R | A% | B% | 25°CCycle Retention Rate | 25°C Thickness Swelling Rate | 45°CCycle Retention Rate | 45°C Thickness Swelling Rate | Lithium Plating |
|---|---|---|---|---|---|---|---|---|---|---|
| example 1-1 | 20 | 2 | 10 | 45 | 15 | 87.91% | 7.90% | 82.22% | 12.49% | Lithium-Free Plating |
| example 1-2 | 40 | 0.5 | 80 | * | * | 81.72% | 13.78% | 76.23% | 18.84% | Slight Lithium Plating |
| example 1-3 | 3 | 4 | 0.75 | * | * | 82.25% | 13.07% | 77.29% | 17.60% | Slight Lithium Plating |
| example 1-4 | 20 | 1 | 20 | * | * | 83.23% | 11.07% | 78.02% | 16.47% | Lithium-Free Plating |
| examplel-5 | 3.5 | 2 | 1.75 | * | * | 85.01% | 9.69% | 80.76% | 14.25% | Lithium-Free Plating |
| example 1-6 | 85 | 2 | 49 | * | * | 84.02% | 9.25% | 79.49% | 14.28% | Lithium-Free Plating |
| example 1-7 | 20 | 0.3 | 66.67 | * | * | 82.05% | 11.55% | 77.10% | 17.28% | Slight Lithium Plating |
| example1-8 | 20 | 5 | 4 | * | * | 82.00% | 12.22% | 77.17% | 17.04% | Slight Lithium Plating |
| example1-9 | 2 | 2 | 1 | * | * | 81.48% | 11.93% | 76.95% | 17.58% | Slight Lithium Plating |
| example2-1 | * | * | * | 10.50 | 15.00 | 82.61% | 12.05% | 77.00% | 17.23% | Slight Lithium Plating |
| example2-2 | * | * | * | 79.50 | 15.00 | 82.41% | 12.86% | 77.85% | 17.53% | Slight Lithium Plating |
| example3-1 | * | * | * | 45.00 | 3.50 | 82.17% | 12.45% | 77.55% | 17.65% | Slight Lithium Plating |
| example3-2 | * | * | * | 45.00 | 29.50 | 82.70% | 12.37% | 77.58% | 17.07% | Slight Lithium Plating |
| Comparative Example1 | 0.5 | 4 | 0.13 | * | * | 77.88% | 17.08% | 72.80% | 22.96% | Severe Lithium Plating |
| Comparative Example2 | 60 | 0.5 | 120 | * | * | 77.61% | 17.37% | 72.55% | 22.76% | Severe Lithium Plating |
| Comparative Example3 | * | * | * | 9 | 15 | 77.60% | 17.54% | 72.59% | 22.96% | Severe Lithium Plating |
| Comparative Example4 | * | * | * | 45 | 35 | 77.50% | 17.88% | 72.73% | 22.41% | Severe Lithium Plating |
| Comparative Example5 | / | / | / | * | * | 75.89% | 19.12% | 70.45% | 24.70% | Severe Lithium Plating |

| | | | | | | | | | | |
|---|---|---|---|---|---|---|---|---|---|---|
| Note: "*" indicates that the corresponding parameter in the example or comparative example is the same as that in Example 1-1. "/" indicates that the corresponding parameter is not tested. | | | | | | | | | | |

A larger H/R ratio results in sharper embossing patterns on the electrodes, making the electrode structure more prone to damage and cracking during battery charge-discharge cycles. Conversely, a smaller H/R ratio produces gentler embossing patterns with shallower traces, failing to leverage the advantages of embossing. When the carboxylic ester content in the electrolyte is excessively high, it reduces the electrolyte's oxidative resistance. Excessive nitrile compound content compromises the stability of the battery's negative electrode interface. Insufficient carboxylic ester and nitrile compound content fails to enhance electrolyte conductivity or reduce viscosity, leading to degraded battery performance. As shown in Table 1, by adjusting H and R to satisfy 0.2 ≤ H/R ≤ 80, A to satisfy 10 ≤ A ≤ 80, and B to satisfy 3 ≤ B ≤ 30, the disclosure minimizes lithium plating, improves fast-charging performance, and enhances cycle stability.

Example Group 4 is conducted following Example 1-1, with primary differences listed in Table 2. Specifically, Example Group 4 modifies the type of carboxylic ester used.

**Table 2**

| | Types of Carboxylic Esters | 25°C Cycle Retention Rate | 25°CThickness Swelling Rate | 45°C Cycle Retention Rate | 45°C Thickness Swelling Rate | Lithium Plating |
|---|---|---|---|---|---|---|
| example 1-1 | Propyl Propionate | 87.91% | 7.90% | 82.22% | 12.49% | Lithium-Free Plating |
| example4-1 | Ethyl Acetate | 86.61% | 7.56% | 80.80% | 12.97% | Lithium-Free Plating |
| example4-2 | Methyl Propionate | 86.87% | 7.71% | 80.83% | 12.47% | Lithium-Free Plating |
| example4-3 | Propyl Butyrate | 86.67% | 8.16% | 81.17% | 12.71% | Lithium-Free Plating |

As shown in Table 2, selecting different types of carboxylic esters according to the present disclosure yields comparable effects, all capable of improving the battery's fast-charging performance, enhancing cycle stability, and reducing lithium plating.

Example Group 5 is conducted following Example 1-1, with primary differences listed in Table 3. Specifically, Example Group 5 modifies the type of nitrile compound used.

**Table 3**

| | Types of Nitrile Compounds | 25°CCycle Retention Rate | 25°C Thickness Swelling Rate | 45°CCycle Retention Rate | 45°C Thickness Swelling Rate | Lithium Plating |
|---|---|---|---|---|---|---|
| example1-1 | Fluoroacetonitrile | 87.91% | 7.90% | 82.22% | 12.49% | Lithium-Free Plating |
| example5-1 | Benzonitrile | 85.89% | 8.27% | 80.79% | 12.60% | Lithium-Free Plating |
| example5-2 | Hexanedinitrile | 86.79% | 7.28% | 80.29% | 12.26% | Lithium-Free Plating |
| example5-3 | 1,2-Bis(cyanoethoxy) ethane | 85.68% | 7.47% | 80.13% | 12.52% | Lithium-Free Plating |

As shown in Table 3, selecting different nitrile compounds produces comparable effects, all capable of improving the battery's fast-charging performance, enhancing cycle stability, and reducing lithium plating.

Example Group 6 is conducted following Example 1-1, with primary differences listed in Table 4. Specifically, Example Group 6 employs special rollers with embossed features using different parameters for processing, altering the average spacing of the first embossed features.

**Table 4**

| | Average Spacing (mm) | 25°C Cycle Retention Rate | 25°C Thickness Swelling Rate | 45°CCycle Retention Rate | 45°C Thickness Swelling Rate | Lithium Plating |
|---|---|---|---|---|---|---|
| example6-1 | 0.8 | 82.10% | 12.07% | 77.24% | 17.97% | Slight Lithium Plating |
| example6-2 | 7.9 | 82.97% | 12.02% | 77.51% | 17.30% | Slight Lithium Plating |
| example6-3 | 0.3 | 77.95% | 17.96% | 72.43% | 22.98% | Severe Lithium Plating |
| example6-4 | 9 | 77.47% | 17.93% | 72.53% | 22.01% | Severe Lithium Plating |

As shown in Table 4, when the average spacing is excessively small, the electrodes are more prone to deformation during charge-discharge cycles, leading to structural damage and compromised battery performance. Conversely, when the average spacing is too large, the embossing density on the electrode surface becomes insufficient, failing to fully leverage the benefits of embossing. When the average spacing of the first embossed features and the first recessed features falls within the range of 0.5 mm-8 mm, it improves the battery's fast-charging performance, enhances cycle stability, and reduces lithium plating.

Example Group 7 is conducted following Example 1-1, with primary differences listed in Table 5. Specifically, Example Group 7 further incorporates difluoroethyl acetate (DFEA) into the electrolyte and adjusts the mass ratio C of propyl propionate (PP) to DFEA.

**Table 5**

| | C | 25°C Cycle Retention Rate | 25°C Thickness Swelling Rate | 45°CCycle Retention Rate | 45°C Thickness Swelling Rate | Lithium Plating | 25°CCycle Retention Rate (4.7V) | 25°C Thickness Swelling Rate (4.7V) |
|---|---|---|---|---|---|---|---|---|
| example 1-1 | / | 87.91% | 7.90% | 82.22% | 12.49% | Lithium-Free Plating | 79.27% | 15.28% |
| example7-1 | 5 | 89.15% | 5.35% | 84.43% | 10.85% | Lithium-Free Plating | 82.63% | 12.70% |
| example7-2 | 1 | 88.33% | 6.91% | 83.08% | 11.66% | Slight Lithium Plating | 80.85% | 14.93% |
| example7-3 | 10 | 88.59% | 6.71% | 83.09% | 11.97% | Slight Lithium Plating | 81.88% | 13.56% |
| example7-4 | 0.5 | 84.13% | 10.70% | 79.54% | 15.18% | Lithium Plating | 76.49% | 18.72% |
| example7-5 | 11 | 84.43% | 10.14% | 79.33% | 15.76% | Lithium Plating | 77.64% | 17.10% |

| | | | | | | | | |
|---|---|---|---|---|---|---|---|---|
| Note: "/" indicates that the corresponding parameter is not tested. | | | | | | | | |

As shown in Table 5, an excessively large value of mass ratio C of PP to DFEA indicates a low mass percentage of DFEA in the electrolyte, resulting in poor oxidative resistance and degraded battery performance. Conversely, when C is too small, the electrolyte viscosity becomes excessively high, lithium salt solubility decreases, lithium plating becomes severe, and battery performance declines. When C satisfies 1 ≤ C ≤ 10, it further enhances the battery's cycle performance under high voltage while maintaining fast-charging performance.

Example Group 8 is conducted following Example 7-1, with primary differences listed in Table 6. Specifically, Example Group 8 replaces the nitrile compound fluoroacetonitrile in the original electrolyte with trans-hexenedinitrile and adjusts the total mass percentage D% of fluorinated carboxylic ester (DFEA) and unsaturated nitrile (trans-hexenedinitrile).

**Table 6**

| | D % | 25°C Cycle Retention Rate | 25°C Thickness Swelling Rate | 45°C Cycle Retention Rate | 45°C Thickness Swelling Rate | Lithium Plating |
|---|---|---|---|---|---|---|
| example8-1 | 15 | 89.34% | 5.46% | 84.09% | 10.00% | Lithium-Free Plating |
| example8-2 | 30 | 88.22% | 6.68% | 83.33% | 11.07% | Slight Lithium Plating |
| example8-3 | 35 | 84.77% | 10.91% | 79.13% | 15.26% | Lithium Plating |

As shown in Table 6, when the nitrile compound in the electrolyte is an unsaturated nitrile (trans-hexenedinitrile), its combination with fluorinated carboxylic ester (DFEA) further enhances the electrolyte's oxidative resistance. Together with the electrode embossing process, this combination improves the battery's high-voltage cycle performance while maintaining fast-charging performance. However, excessive addition of unsaturated nitrile and fluorinated carboxylic ester in the electrolyte increases its viscosity, degrading battery performance.

Example Group 9 is conducted following Example 8-1, with primary differences listed in Table 7. Specifically, Example Group 9 further incorporates fluorobenzene (a fluorobenzene compound) into the electrolyte and adjusts the mass percentage E% of fluorobenzene in the electrolyte.

**Table 7**

| | E % | 25°C Cycle Retention Rate | 25°C Thickness Swelling Rate | 45°C Cycle Retention Rate | 45°C Thickness Swelling Rate | Lithium Plating |
|---|---|---|---|---|---|---|
| example9-1 | 7.5 | 89.99% | 5.38% | 84.35% | 10.34% | Lithium-Free Plating |
| example9-2 | 9.8 | 88.54% | 6.14% | 83.88% | 11.64% | Slight Lithium Plating |
| example9-3 | 2.3 | 88.94% | 6.57% | 83.45% | 11.16% | Slight Lithium Plating |
| example9-4 | 12 | 84.05% | 10.43% | 79.75% | 15.94% | Lithium Plating |

As shown in Table 7, further incorporating fluorobenzene compounds into the electrolyte and ensuring E satisfies 2 ≤ E ≤ 10 further reduces lithium plating on the electrode surface, optimizes the battery's fast-charging performance, and improves cycle stability. Avoiding excessively large E values prevents poor lithium salt solubility and degraded battery performance.

It should be noted that in this document, the terms "comprises," "includes," or any other variants thereof are intended to cover non-exclusive inclusion, such that a process, method, article, or apparatus that comprises a list of elements not only includes those elements but may also include other elements not expressly listed or inherent to such process, method, article, or apparatus. In the absence of further restrictions, elements defined by the phrase "comprises a..." do not preclude the presence of additional identical elements in the process, method, article, or apparatus that includes the element. Furthermore, it should be pointed out that the scope of the methods and apparatuses in the embodiments of this application is not limited to executing functions in the order shown or discussed, and may also include executing functions in a substantially simultaneous manner or in reverse order depending on the functions involved. For example, the described method may be executed in a different order than described, and various steps may be added, omitted, or combined. Additionally, features described with reference to certain examples may be combined in other examples.

The above description is merely preferred embodiments of the present disclosure and is not intended to limit the present disclosure. Any modifications, equivalent substitutions, etc., made within the spirit and principle of the present disclosure, shall be included within the scope of protection of the present disclosure.

## Claims

1. A lithium-ion battery, **characterized in that** comprising a positive electrode plate, a negative electrode plate, and an electrolyte;
the positive electrode plate comprises a first surface (4) and a second surface (3) arranged oppositely along a thickness direction of the positive electrode plate, the first surface (4) being provided with a plurality of first projections (6) at intervals, and the second surface (3) being correspondingly provided with a plurality of first recesses (5); a height of the first projection (6) is denoted as H µm, and a diameter of the first projection (6) is denoted as R mm, with H and R satisfying: 0.2 ≤ H/R ≤ 80;
the electrolyte comprises a carboxylic ester, wherein a mass percentage of the carboxylic ester relative to the total electrolyte mass denoted as A%; A satisfies the follow formula: 10 ≤ A ≤ 80; and
the electrolyte comprises a nitrile compound, wherein a mass percentage of the nitrile compound relative to the total electrolyte mass is denoted as B%; B satisfies: 3 ≤ B ≤ 30.

2. The lithium-ion battery according to claim 1, **characterized in that** H and R satisfy: 0.75 ≤ H/R ≤ 20;and/or,
the carboxylic ester comprises at least one of a C4-C10 carboxylic ester and a C4-C10 fluorinated carboxylic ester;and/or,
the nitrile compound comprises at least one of a C2-C10 mononitrile compound, a C2-C10 fluorinated mononitrile compound, a C2-C10 polynitrile compound and a C2-C10 fluorinated polynitrile compound.

3. The lithium-ion battery according to claim 1 or 2, **characterized in that** the carboxylic ester comprises at least one of ethyl acetate, propyl acetate, butyl acetate, methyl propionate, ethyl propionate, propyl propionate, methyl butyrate, ethyl butyrate, propyl butyrate, and ethyl difluoroacetate;and/or,
the nitrile compound comprises at least one of acetonitrile, propionitrile, butyronitrile, isobutyronitrile, oxalonitrile, succinonitrile, glutaronitrile, adiponitrile, 1,3,6-hexanetricarbonitrile, benzonitrile, acrylonitrile, crotononitrile, trans-butenedinitrile, trans-hexanedinitrile, 1,2-bis(cyanoethoxy)ethane, or a fluorinated derivative thereof.

4. The lithium-ion battery according to claim 3, **characterized in that** the carboxylic ester comprises propyl propionate and ethyl difluoroacetate;
a mass ratio of propyl propionate to ethyl difluoroacetate in the electrolyte is denoted as C, with C satisfying: 1 ≤ C ≤ 10.

5. The lithium-ion battery according to claim any one of claims 2 to 4, **characterized in that** the fluorinated derivative of the C4-C10 carboxylic ester is a fluorinated carboxylic ester;and/or,
the nitrile compound comprises an unsaturated nitrile; the unsaturated nitrile comprises at least one of an unsaturated mononitrile compound,a fluorinated unsaturated mononitrile compound, an unsaturated polynitrile compound or a fluorinated unsaturated polynitrile compound.

6. The lithium-ion battery according to claim 5, **characterized in that** a total mass percentage of the fluorinated carboxylic ester and the unsaturated nitrile relative to the total electrolyte mass is denoted as D %, with D satisfying: 0 ≤ D ≤ 30;and/or,
the fluorinated carboxylic ester comprises at least one of ethyl difluoroacetate, ethyl trifluoroacetate, ethyl 3-fluoropropionate, and ethyl 3,3,3-trifluoropropionate;and/or,
the unsaturated nitrile comprises at least one of acrylonitrile, crotononitrile, trans-butenedinitrile, and trans-hexanedinitrile.

7. The lithium-ion battery according to any one of claims 1 to 6, **characterized in that** the first projection (6) and/or the first recess (5) satisfy at least one of the following conditions:
(a) a average spacing between adjacent first projections (6) is 0.5 mm-8 mm; and/or, a average spacing between adjacent first recesses (5) is 0.5 mm-8 mm;
(b) athe height of the first projection (6) is 3 µm-100 µm; and/or, a depth of the first recess (5) is 3 µm-100 µm;
(c) a diameter of the first projection (6) is 0.5 mm-4 mm; and/or, a diameter of the first recess (5) is 0.5 mm-4 mm.

8. The lithium-ion battery according to claim 7, **characterized in that** the first projection and/or the first recess satisfy at least one of the following conditions:
(a) the average spacing between adjacent first projections (6) is 1 mm-4 mm; and/or, the average spacing between adjacent first recesses (5) is 1 mm-4 mm;
(b) the height of the first projection (6) is 5 µm-80 µm; and/or, the depth of the first recess (5) is 5 µm-80 µm;
(c) the diameter of the first projection (6) is 1 mm-3 mm; and/or, the diameter of the first recess (5) is 1 mm-3 mm.

9. The lithium-ion battery according to any one of claims 1 to 8, **characterized in that** the electrolyte comprises a fluorobenzene compound; and
a mass percentage of the fluorobenzene compound relative to the total electrolyte mass is denoted as E %, with E satisfying: 2 ≤ E ≤ 20.

10. The lithium-ion battery according to claim 9, **characterized in that** the fluorobenzene compound comprises at least one of fluorobenzene, 1,2-difluorobenzene, 1,3-difluorobenzene, 1,4-difluorobenzene, 1,2,3-trifluorobenzene, 1,2,4-trifluorobenzene, 1,2,3,4-tetrafluorobenzene, 1,2,3,5-tetrafluorobenzene, 1,2,4,5-tetrafluorobenzene, pentafluorobenzene, perfluorobenzene, or a fluorinated aromatic compound thereof.

11. The lithium-ion battery according to any one of claims 1 to 10, **characterized in that** the electrolyte comprises a lithium salt; a mass percentage of the lithium salt relative to the total electrolyte mass is 5%-20%; and
the lithium salt comprises a lithium-containing inorganic salt and/or a lithium-containing organic salt.

12. The lithium-ion battery according to claim 11, **characterized in that** the lithium-containing inorganic salt comprises at least one of LiPF₆, LiBF₄, and LiPO₂F₂; and/or,
the lithium-containing organic salt comprises at least one of lithium bis(oxalato)borate, lithium difluorobis(oxalato)phosphate, lithium difluorobis(oxalato)borate, lithium bis(trifluoromethanesulfonyl)imide, lithium bis(fluorosulfonyl)imide, or lithium bis(dithiooxalato)imide.
